(19) Europäisches Patentamt
European Patent Office
Office européen des brevets

(11) Veröffentlichungsnummer: **0 232 723**
**A1**

## (12) EUROPÄISCHE PATENTANMELDUNG

(21) Anmeldenummer: **87100290.3**

(22) Anmeldetag: **12.01.87**

(51) Int. Cl.4: **A01N 47/42**

(30) Priorität: **22.01.86 DE 3601801**

(43) Veröffentlichungstag der Anmeldung:
**19.08.87 Patentblatt 87/34**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Fest, Christa, Dr.**
**Im Johannistal 20**
**D-5600 Wuppertal 1(DE)**
Erfinder: **Müller, Klaus-Helmut, Dr.**
**Bockhackstrasse 55**
**D-4000 Düsseldorf 13(DE)**
Erfinder: **Pfister, Theodor, Dr.**
**Lichtenberger Strasse 30**
**D-4019 Monheim(DE)**
Erfinder: **Riebel, Hans-Joachim, Dr.**
**In der Beek 92**
**D-5600 Wuppertal 1(DE)**
Erfinder: **Santel, Hans-Joachim, Dr.**
**Gruenstrasse 9a**
**D-5090 Leverkusen(DE)**
Erfinder: **Schmidt, Robert R., Dr.**
**Im Waldwinkel 110**
**D-5060 Bergisch-Gladbach 2(DE)**

## (54) Herbizide Mittel.

(57) Die Erfindung betrifft die Verwendung von Halogenalkoxyphenylsulfonylisothioureidoazinen der allgemeinen Formel (I)

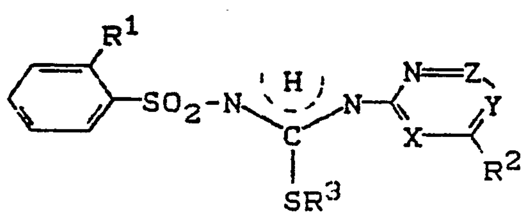

(I)

(worin die Reste X, Y, Z, $R^1$, $R^2$ und $R^3$, die in der Beschreibung angegebenen Bedeutungen haben) als herbizide Mittel.

EP 0 232 723 A1

## Herbizide Mittel

Die vorliegende Erfindung betrifft die Verwendung von Halogenalkoxyphenylsulfonylisothioureidoazinen als Herbizide.

Verschiedene Isothioharnstoffe wie z.B. N'-(4,6-Dimethoxypyrimidin-2-yl)-N''-(2-chlor-benzolsulfonyl)-S-methyl-isothioharnstoff sind als potentielle Herbizide bekannt geworden, haben jedoch bisher als Mittel zur Unkrautbekämpfung und/oder Regulierung des Pflanzenwachstums keine größere Bedeutung erlangt (vgl. EP-A 5986).

Es wurde nun gefunden, daß die Halogenalkoxyphenylsulfonylisothioureidoazine der allgemeinen Formel (I)

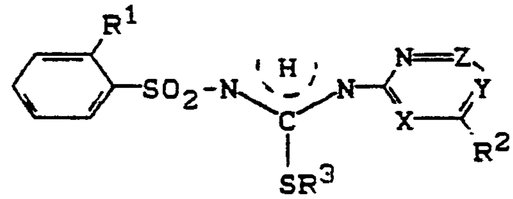

(I)

in welcher

$R^1$ für Halogen-$C_1$-$C_4$-alkoxy steht,

$R^2$ für Wasserstoff, Halogen, Hydroxy, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, Amino, $C_1$-$C_4$-Alkylamino oder Di-($C_1$-$C_4$-alkyl)-amino steht,

X für Stickstoff oder eine -CH-Gruppierung steht,

Y für Stickstoff oder eine -$CR^4$-Gruppierung steht, worin

$R^4$ für Wasserstoff, Halogen, Cyano, $C_1$-$C_4$-Alkyl, Formyl, $C_1$-$C_4$-Alkyl-carbonyl oder $C_1$-$C_4$-Alkoxy-carbonyl steht,

Z für Stickstoff oder eine -$CR^5$-Gruppierung steht, worin

$R^5$ für Wasserstoff, Halogen, Hydroxy, $C_1$-$C_4$-Alkyl, $C_1$-$C_4$-Alkoxy, $C_1$-$C_4$-Alkylthio, $C_1$-$C_4$-Alkylamino oder Di-($C_1$-$C_4$-alkyl)-amino steht und

in welcher weiter

$R^3$ für $C_1$-$C_{10}$-Alkyl (welches gegebenenfalls durch Fluor, Chlor, Brom, Cyano, $C_1$-$C_4$-Alkoxy, Carboxy, $C_1$-$C_4$-Alkoxycarbonyl, Aminocarbonyl, $C_1$-$C_4$-Alkylaminocarbonyl oder Di-($C_1$-$C_4$-alkyl)-amino-carbonyl substituiert ist, für $C_2$-$C_6$-Alkenyl (welches gegebenenfalls durch Fluor, Chlor und/oder Brom substituiert ist), $C_2$-$C_6$-Alkinyl oder für Phenyl-$C_1$-$C_2$-alkyl (welches im Phenylteil gegebenenfalls durch Fluor, Chlor, Brom, Nitro, Cyano, $C_1$-$C_4$-Alkyl, $C_1$-$C_4$-Alkoxy oder $C_1$-$C_4$-Alkoxy-carbonyl substituiert ist) steht,

sehr gut geeignet sind zur Bekämpfung von Unkräutern, insbesondere (von Unkräutern) in monokotylen Kulturen.

Überraschenderweise zeigen die erfindungsgemäß zu verwendenden Halogenalkoxyphenylsulfonylisothioureidoazine z.B. beim Einsatz in wichtigen Kulturpflanzen eine wesentlich bessere Wirkung gegen Unkräuter als die aus dem Stand der Technik bekannten Isothioharnstoffe, wie z.B. N'-(4,6-Dimethoxy-pyrimidin-2-yl)-N''-(2-chlor-benzolsulfonyl)-S-methyl-isothioharnstoff (vgl. EP-A 5986).

Die erfindungsgemäß zu verwendenden Halogenalkoxyphenylsulfonylisothioureidoazine sind durch die Formel (I) all gemein definiert. In dieser Formel stehen vorzugsweise

$R^1$ für Halogen-$C_1$-$C_2$-alkoxy mit bis zu 5 Halogenatomen, wie Fluor und/oder Chlor im Alkylteil,

$R^2$ für Wasserstoff, Fluor, Chlor, Brom, Methyl, Trifluormethyl, Methoxy, Ethoxy, Difluormethoxy, Methylthio, Ethylthio, Amino, Methylamino, Ethylamino, Dimethylamino oder Diethylamino,

X für Stickstoff oder eine -CH-Gruppierung,

Y für Stickstoff oder eine -$CR^4$-Gruppierung, worin

$R^4$ für Wasserstoff, Fluor, Chlor, Brom, Cyano, Methyl, Formyl, Acetyl, Methoxycarbonyl oder Ethoxycarbonyl steht,

und

Z für Stickstoff oder eine -$CR^5$-Gruppierung, worin

$R^5$ für Wasserstoff, Fluor, Chlor, Brom, Methyl, Ethyl, Methoxy, Ethoxy, Propoxy, Isopropoxy, Methylthio, Ethylthio, Methylamino, Ethylamino, Dimethylamino oder Diethylamino steht, und

$R^3$ für $C_1$-$C_6$-Alkyl (welches gegebenenfalls durch Fluor, Chlor, Brom, Cyano, $C_1$-$C_2$-Alkoxy, Carboxy, $C_1$-$C_2$-

Alkoxycarbonyl, Aminocarbonyl, $C_1$-$C_2$-Alkylamino-carbonyl oder Di-($C_1$-$C_2$-alkyl)-amino-carbonyl substituiert ist), für $C_3$-$C_4$-Alkenyl (welches gegebenenfalls durch Fluor, Chlor und/oder Brom substituiert ist), $C_3$-$C_4$-Alkinyl oder für Benzyl und Phenylethyl (welche im Phenylteil gegebenenfalls durch Fluor, Chlor, Brom, Nitro, $C_1$-$C_2$-Alkyl, $C_1$-$C_2$-Alkoxy oder $C_1$-$C_2$-Alkoxycarbonyl substituiert sind).

Besonders bevorzugt werden die Verbindungen der Formel (I) verwendet, in welcher

$R^1$ für Difluormethoxy, Trifluormethoxy, 2-Fluor-1-ethoxy oder 2-Chlor-1-ethoxy steht,

$R^2$ für Wasserstoff, Fluor, Chlor, Brom, Methyl, Trifluormethyl, Methoxy, Ethoxy, Difluormethoxy, Methylthio, Ethylthio, Amino, Methylamino, Ethylamino, Dimethylamino, oder Diethylamino steht,

X für Stickstoff oder eine -CH-Gruppierung steht,

Y für Stickstoff oder eine-$CR^4$-Gruppierung steht, worin

$R^4$ für Wasserstoff, Fluor, Chlor, Brom, Cyano, Methyl, Formyl, Acetyl, Methoxycarbonyl oder Ethoxycarbonyl steht und

Z für Stickstoff oder eine -$CR^5$-Gruppierung steht, worin

$R^5$ für Wasserstoff, Fluor, Chlor, Brom, Methyl, Ethyl, Methoxy, Ethoxy, Propoxy, Isopropoxy, Methylthio, Ethylthio, Methylamino, Ethylamino, Dimethylamino oder Diethylamino steht und

$R^3$ für $C_1$-$C_3$-Alkyl, $C_1$-$C_2$-Alkoxy-carbonyl-methyl oder Benzyl steht.

Ganz besonders bevorzugt werden die Verbindungen der Formel (I) verwendet, in welcher

$R^1$ für Trifluormethoxy steht und

$R^2$, X, Y, Z und $R^3$ die oben angegebenen besonders bevorzugten Bedeutungen haben.

Die erfindungsgemäß zu verwendenden Halogenalkoxyphenylsulfonylisothioureidoazine der Formel (I) sind Gegenstand von älteren Patentanmeldungen, die noch nicht veröffentlicht sind (vergl. die deutschen Patentanmeldungen P 3 517 844, P 3 517 842 und P 3 517 821).

Man erhält die Verbindungen der Formel (I), indem man

(a) N-Sulfonyl-imino-dithiokohlensäureester der Formel (II)

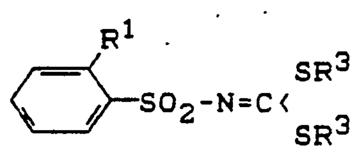

(II)

in welcher

$R^1$ und $R^3$ die oben angegebenen Bedeutungen haben,

mit Aminen der Formel (III)

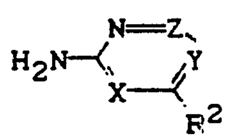

(III)

in welcher

$R^2$, X, Y und Z die oben angegebenen Bedeutungen haben,

gegebenenfalls in Gegenwart von Basen, wie z.B. Natriumhydrid oder Kalium-tert.-butylat, und gegebenenfalls in Gegenwart von Verdünnungsmitteln, wie z.B. Tetrahydrofuran, Dioxan oder Dimethylformamid, bei Temperaturen zwischen 0 °C und 100 °C umsetzt, nach Reaktionsende mit Wasser verdünnt, mit einer starken Säure, wie z.B. Salzsäure, ansäuert und die kristallin anfallenden Produkte der Formel (I) durch Absaugen isoliert;

oder

(b) Sulfonylguanidine der Formel (IV)

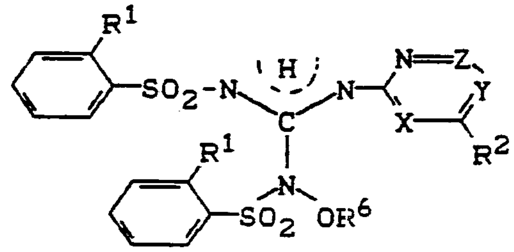

(IV)

in welcher

$R^1$, $R^2$, X, Y und Z die oben angegebenen Bedeutungen haben und

$R^6$ für $C_1$-$C_4$-Alkyl oder Benzyl steht,

mit Mercaptanen der Formel (V)

$R^3SH$ (V)

in welcher

$R^3$ die oben angegebene Bedeutung hat,

gegebenenfalls in Gegenwart von Säureakzeptoren, wie z.B. Triethylamin, Natriummethylat oder Pyrazol, und gegebenenfalls in Gegenwart von Verdünnungsmitteln wie Methanol, Ethanol oder i-Propanol, bei Temperaturen zwischen 0 °C und 150 °C umsetzt, nach Reaktionsende gegebenenfalls mit einer Säure wie z.B. Eisessig ansäuert und das Reaktionsprodukt nach üblichen Methoden aufarbeitet.

Die bei der Verfahrensvariante (a) als Ausgangsstoffe benötigten N-Sulfonyl-imino-dithiokohlensäureester sind durch die Formel (II) allgemein definiert. In Formel (II) haben $R^1$ und $R^3$ vorzugsweise bzw. insbesondere die gleichen Bedeutungen, wie sie oben im Rahmen der Substituentendefinition für Formel (I) vorzugsweise bzw. als insbesondere bevorzugt gekennzeichnet angegeben sind.

Die N-Sulfonyl-imino-dithiokohlensäureester der Formel (II) können nach an sich bekannten Verfahren hergestellt werden (vgl. Chem. Ber. 99 (1966), 2855 und EP-OS 5986).

Die weiterhin als Ausgangsstoffe für die Verfahrensvariante (a) einzusetzenden Amine sind durch die Formel (III) allgemein definiert. In Formel (III) haben X, Y, Z und $R^2$ vorzugsweise bzw. insbesondere die gleichen Bedeutungen, wie sie oben im Rahmen der Substituentendefinition für Formel (I) vorzugsweise bzw. als insbesondere bevorzugt gekennzeichnet angegeben sind.

Die Amine der Formel (III) sind bekannt und/oder können nach an sich bekannten Verfahren hergestellt werden.

Die als Ausgangstoffe für das Verfahren (b) benötigten Sulfonylguanidine sind durch die Formel (IV) allgemein definiert. In Formel (IV) haben $R^1$, $R^2$, X, Y und Z vorzugsweise bzw. insbesondere die gleichen Bedeutungen, wie sie oben im Rahmen der Substituentendefinition für Formel (I) vorzugsweise bzw. als insbesondere bevorzugt angegeben sind. $R^6$ steht in dieser Formel für $C_1$-$C_4$-Alkyl oder Benzyl, vorzugsweise für Methyl oder Benzyl.

Die Verbindungen der Formel (IV) sind bekannt und/oder lassen sich nach bekannten Verfahren herstellen (vgl. z.B. DE-OS 3 334 455).

Die weiterhin als Ausgangsstoffe für das Verfahren (b) benötigten Mercaptane sind durch die Formel - (V) allgemein definiert. In Formel (V) hat $R^3$ vorzugsweise bzw. insbesondere die gleichen Bedeutungen, wie sie oben im Rahmen der Substituentendefinition für Formel (I) vorzugsweise bzw. als insbesondere bevorzugt angegeben sind.

Die Mercaptane der Formel (V) sind allgemein bekannte Verbindungen der organischen Chemie.

Die erfindungsgemäß zu verwendenden Verbindungen der Formel (I) sind besonders gut geeignet zur selektiven Bekämpfung mono-und dikotyler Unkräuter, insbesondere in monokotylen Kulturen wie z.B. Weizen und Mais.

Die erfindungsgemäß zu verwendenden Wirkstoffe können als Defoliants, Desiccants, Krautabtötungsmittel und insbesondere als Unkrautvernichtungsmittel eingesetzt werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäß zu verwendenden Wirkstoffe können z.B. bei den folgenden Pflanzen eingesetzt werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie-und Gleisanlagen und auf Wegen und Plätzen mit und ohne Baumbewuchs. Ebenso können die Verbindungen zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht-und Hopfenanlagen und zur selektiven Unkrautbekämpfung in einjährigen Kulturen eingesetzt werden.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von ober flächenaktiven Mitteln, also Emulgiermitteln und/oder Dispergiermitteln und/oder - schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle,wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier-und/oder schaumerzeugende Mittel kommen in Frage: z.B. nichionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewischtsprozent Wirkstoff, vorzugsweise zwischen 0,5 und 90 %.

Die Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen können bekannte Herbizide verwendet werden wie z. B.

N-(2-Benzthiazolyl)-N,N'-dimethylharnstoff, 3-(3-Chlor-4-methylphenyl)-1,1-dimethylharnstoff, 3-(4-Isopropylphenyl)-1,1-dimethylharnstoff, 2-Chlor-N-{[4-methoxy-6-methyl-1,3,5-triazin-2-yl)-amino]-carbonyl}-benzolsulfonamid, Ethyl-2-{[(4-Chlor-6-methoxy-2-pyrimidyl)-aminocarbonyl]-aminosulfonyl}-benzoat, 2-Ethylamino-6-(1,1-dimethylethyl-amino)-4-methylthio-1,3,5-triazin, 4-Amino-6-(1,1-dimethylethyl)-3-methylthio-1,2,4-triazin-5(4H)-on, 4-Amino-6-(1,1-dimethylethyl)-3-ethylthio-1,2,4-triazin-5-(4H)-on, 1-Amino-6-ethylthio-3-(2,2-dimethylpropyl)-1,3,5-triazin-2,4-(1H,3H)-dion, 5-(2-Chlor-4-trifluormethyl-phenoxy)-N-methylsulfonyl-2-nitrobenzamid, (2-Ethoxy-1-methyl-2-oxo-ethyl)-5-(2-chlor-4-trifluormethylphenoxy)-2-nitro-benzoat, 2-[4-(2,4-Dichlorphenoxy)-phenoxy]-propionsäuremethylester, 2-{4-[(3-Chlor-5-trifluormethyl-2-pyridinyl)oxy]-phenoxy}-propionsäure, das R-Enantiomere des 2-{4-[(3,5-Dichlor-2-pyridinyl)oxy]-phenoxy}-propionsäure-(trimethylsilyl)-methylesters, 2,4-Dichlorphenoxyessigsäure, 2-(2,4-Dichlorphenoxy)-propionsäure, 4-Chlor-2-methyl-phenoxy-essigsäure, 2-(4-Chlor-2-methyl-phenoxy)-propionsäure, 3,5-Diiod-4-hydroxy-benzonitril, 3,5-Dibrom-4-hydroxy-benzonitril, 2-[5-Methyl-5-(1-methylethyl)-4-oxo-2-imidazolin-2-yl]-3-pyridincarbonsäure, 2-(1-Ethoxyamino-butyliden)-5-(2-ethylthiopropyl)-1,3-cyclohexandion, [(4-Amino-3,5-dichlor-6-fluor-2-pyridinyl)oxy]-essigsäure und 3-Isopropyl-2,1,3-benzothiadiazinon-(4)-2,2-dioxid. Einige Mischungen besitzen überraschenderweise auch synergistische Wirkung.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 und 10 kg Wirkstoff pro Hektar Bodenfläche, vorzugsweise zwischen 0,05 und 5 kg pro ha.

Die Herstellung und die Verwendung der Wirkstoffe geht aus den nachfolgenden Beispielen hervor.

Beispiel A

Pre-emergence-Test/Gewächshaus

Lösungsmittel: 5 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)

100 % = totale Vernichtung

Bei diesem Test zeigen z.B. die folgenden Verbindungen der Herstellungbeispiele (7) und (9) eine bessere herbizide Wirksamkeit als die Vergleichsverbindung (A).

## Tabelle A

Pre-emergence Test/Gewächshaus

| Wirkstoff | Wirkstoff-aufwand kg/ha | Weizen | Datura | Stellaria | Matricaria | Alopecurus | Lolium |
|---|---|---|---|---|---|---|---|
| (A) (Bekannt) | 0,5 | 0 | 0 | 0 | 30 | 20 | 0 |
| (7) | 0,5 | 0 | 80 | 90 | 90 | 90 | 90 |
| (9) | 0,5 | 0 | 80 | 90 | 90 | 80 | 80 |

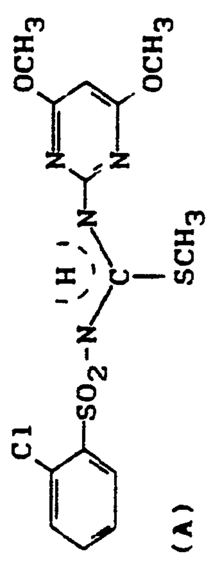
(A)

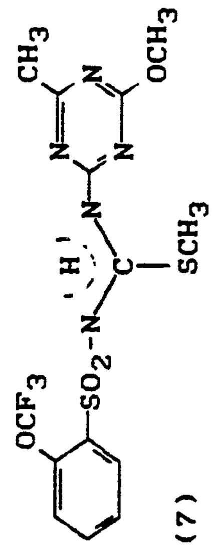
(7)

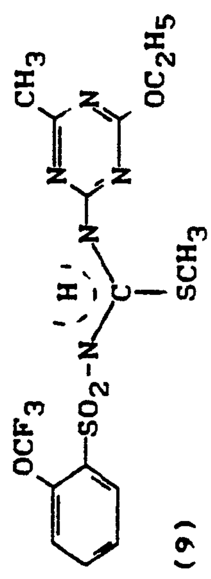
(9)

Beispiel B

Post-emergence-Test/Gewächshaus

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 -15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.

Es bedeuten:

0 % = keine Wirkung (wie unbehandelte Kontrolle)

100 % = totale Vernichtung

Bei diesem Test zeigen z.B. die folgenden Verbindungen der Herstellungsbeispiele (7) und (9) eine sehr gute Verträglichkeit in Kulturpflanzen wie z.B. Mais und Weizen und gleichzeitig eine größere Wirksamkeit gegen Unkräuter wie z.B. Matricaria, Chenopodium und Polygonum als die Vergleichsverbindung (A).

**Tabelle B**

Post-emergence Test/Gewächshaus

| Wirkstoff | Wirkstoff-aufwand kg/ha | Mais | Weizen | Chenopodium | Matricaria | Polygonum | Sinapis |
|---|---|---|---|---|---|---|---|
| (A) (Bekannt) | 0,5 | 0 | 0 | 40 | 0 | 10 | 80 |
| (7) | 0,25 | 0 | 0 | 100 | 100 | 100 | 100 |
| (9) | 0,5 | 0 | 0 | 100 | 100 | 70 | 100 |

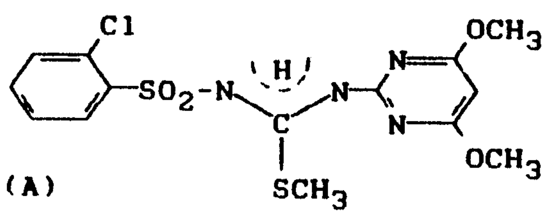

(A)

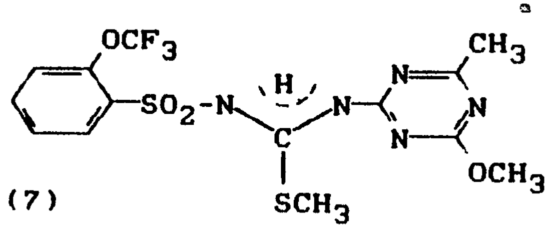

(7)

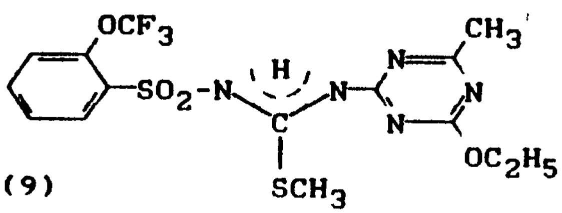

(9)

Herstellungsbeispiele

Beispiel 1

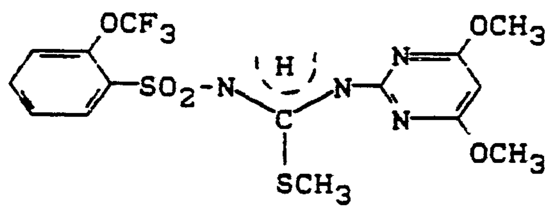

(Verfahren (a))

Eine Suspension von 3,0 g (0.1 Mol) Natriumhydrid (in Öl) wird unter Rühren zu einer Mischung aus 7,8 g (0.05 Mol) 2-Amino-4,6-dimethoxy-pyrimidin gegeben und das Gemisch wird 12 Stunden bei 20 °C gerührt. Dann werden 17,3 g (0.05 Mol) N-(2-Trifluormethoxy-benzolsulfonyl)-S′, S″-dimethyl-iminodithiokohlensäureester portionsweise so zum Reaktionsgemisch gegeben, daß die Reaktionstemperatur nicht über 40 °C steigt. Nach fünfstündigem Rühren bei 20 °C wird 1 l Eiswasser dazugegeben und filtriert. Das Filtrat wird mit konzentrierter Salzsäure angesäuert, das hierbei kristallin angefallene Produkt wird durch Absaugen isoliert, in Methylenchlorid aufgenommen, mit Wasser gewaschen, getrocknet und eingeengt.

Nach Umkristallisieren aus Ethanol erhält man 8,8 g (38,9 % der Theorie) N′-(4,6-Dimethoxy-pyrimidin-2-yl)-N″-(2-trifluormethoxy-benzolsulfonyl)-S-methyl-isothioharnstoff als weiße Kristalle vom Schmelzpunkt 137 °C.

Beispiel 2

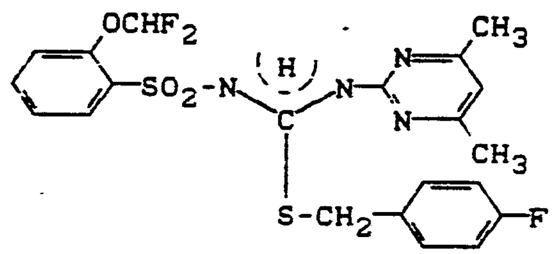

(Verfahren (b))

Eine Mischung aus 6,1 g (0.01 Mol) N′-(4,6-Dimethylpyrimidin-2-yl)-N″-methoxy-N″, N‴ -bis-(2-difluormethoxybenzolsulfonyl)-guanidin, 1,1 g (0.02 Mol) Natriummethylat, 2,8 g (0.02 Mol) 4-Fluorbenzylmercaptan und 20 ml Ethanol wird 15 Stunden bei 60 °C gerührt. Anschließend wird mit Eisessig angesäuert, in Methylenchlorid aufgenommen, 2 mal mit Wasser gewaschen, getrocknet und eingeengt.

Nach Umkristallisieren aus Ethanol erhält man 1,3 g (27 % der Theorie) N′-(4,6-Dimethyl-pyrimidin-2-yl)-N″-(2-difluormethoxy-benzolsulfonyl)-S-(4-fluor-benzyl)-isothioharnstoff vom Schmelzpunkt 156 °C.

Analog Beispiel 1 und 2 können die folgenden Verbindungen der Formel (I)

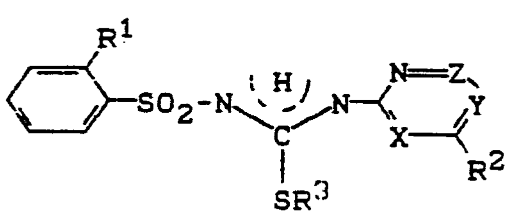

(I)

erhalten werden:

Tabelle 1

| Beisp. Nr. | $R^1$ | $R^3$ | 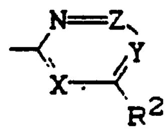 | Fp [° C] |
|---|---|---|---|---|
| 3 | $-OCF_3$ | $CH_3$ | 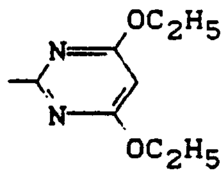 | 190 |
| 4 | $-OCF_3$ | $CH_3$ | 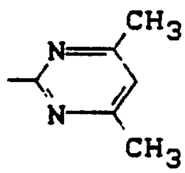 | 122 |
| 5 | $-OCF_3$ | $CH_3$ | 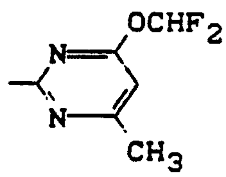 | 91 |
| 6 | $-OCF_3$ | $CH_3$ | 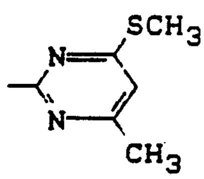 | 139 |
| 7 | $-OCF_3$ | $CH_3$ | 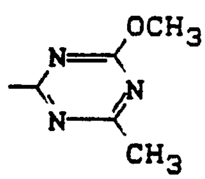 | 120 |
| 8 | $-OCF_3$ | $CH_3$ | 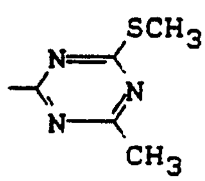 | 142 |
| 9 | $-OCF_3$ | $CH_3$ | 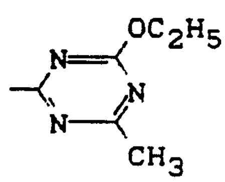 | 103 |

<u>Tabelle 1</u> - Fortsetzung

| Beisp. Nr. | $R^1$ | $R^3$ | 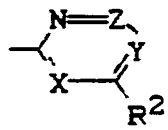 | Fp [°C] |
|---|---|---|---|---|
| 10 | $-OCF_3$ | $CH_3$ | 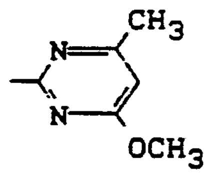 | 138 |
| 11 | $-OCF_3$ | $CH_3$ | 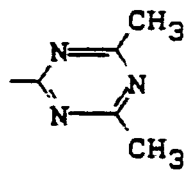 | 117 |
| 12 | $-OCHF_2$ | $-CH_2-$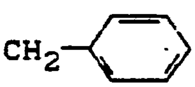 | 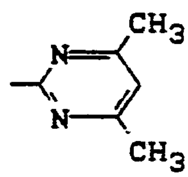 | 167 |
| 13 | $-OCF_3$ | $CH_3$ | 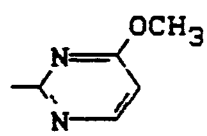 | 105 |
| 14 | $-OCH_2CH_2Cl$ | $CH_3$ | 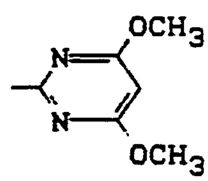 | |
| 15 | $-OCH_2CH_2Cl$ | $CH_3$ | 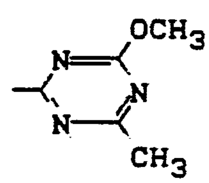 | |
| 16 | $-OCH_2CH_2Cl$ | $CH_3$ | 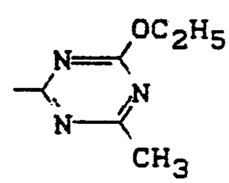 | |

Tabelle 1 - Fortsetzung

| Beisp. Nr. | $R^1$ | $R^3$ | 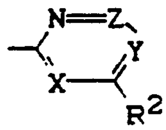 | Fp [°C] |
|---|---|---|---|---|
| 17 | $-OCF_3$ | $-CH_2COOCH_3$ | 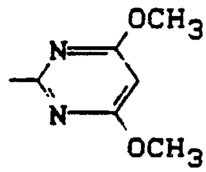 | |
| 18 | $-OCF_3$ | $-CH_2COOCH_3$ | 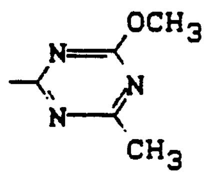 | |
| 19 | $-OCF_3$ | $-CH_2COOCH_3$ | 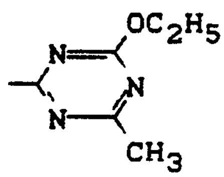 | |
| 20 | $-OCHF_2$ | $CH_3$ | 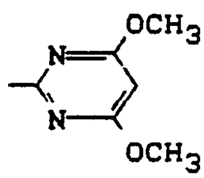 | |
| 21 | $-OCHF_2$ | $CH_3$ | 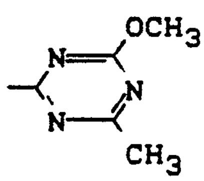 | |
| 22 | $-OCHF_2$ | $CH_3$ | 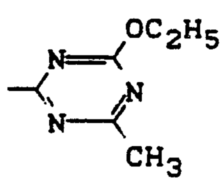 | |
| 23 | $-OCF_3$ | $-CH_2$ 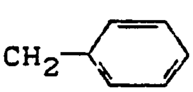 | 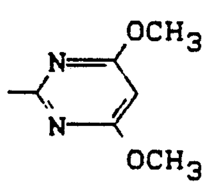 | |

Tabelle 1 - Fortsetzung

| Beisp. Nr. | $R^1$ | $R^3$ | 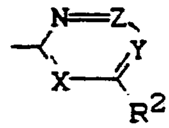 | Fp [°C] |
|---|---|---|---|---|
| 24 | $-OCF_3$ | $-CH_2-$ 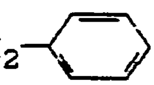 | 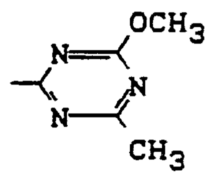 | |
| 25 | $-OCF_3$ | $-CH_2-$ 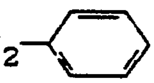 | 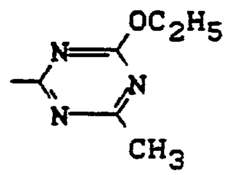 | |
| 26 | $-OCF_3$ | $-C_2H_5$ | 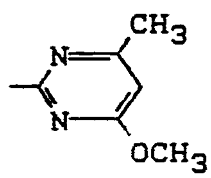 | 108 |

**Ansprüche**

1. Herbizide Mittel, gekennzeichnet durch einen Gehalt an mindestens einem Halogenalkoxyphenylsulfonylisothioureidoazin der allgemeinen Formel (I)

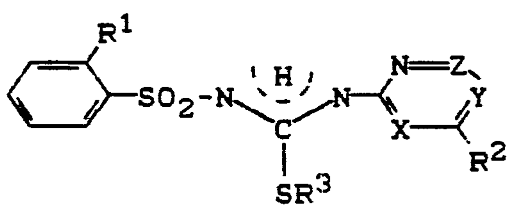

(I)

in welcher
$R^1$ für Halogen-$C_1$-$C_4$-alkoxy steht,
$R^2$ für Wasserstoff, Halogen, Hydroxy, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, Amino, $C_1$-$C_4$-Alkylamino oder Di-($C_1$-$C_4$-alkyl)-amino steht,
X für Stickstoff oder eine -CH-Gruppierung steht,
Y für Stickstoff oder eine -$CR^4$-Gruppierung steht, worin
$R^4$ für Wasserstoff, Halogen, Cyano, $C_1$-$C_4$-Alkyl, Formyl, $C_1$-$C_4$-Alkyl-carbonyl oder $C_1$-$C_4$-Alkoxy-carbonyl steht,
Z für Stickstoff oder eine -$CR^5$-Gruppierung steht, worin
$R^5$ für Wasserstoff, Halogen, Hydroxy, $C_1$-$C_4$-Alkyl, $C_1$-$C_4$-Alkoxy, $C_1$-$C_4$-Alkylthio, $C_1$-$C_4$-Alkylamino oder Di-($C_1$-$C_4$-alkyl)-amino steht und
$R^3$ für $C_1$-$C_{10}$-Alkyl (welches gegebenenfalls durch Fluor, Chlor, Brom, Cyano, $C_1$-$C_4$-Alkoxy, Carboxy, $C_1$-$C_4$-Alkoxycarbonyl, Aminocarbonyl, $C_1$-$C_4$-Alkylamino-carbonyl oder Di-($C_1$-$C_4$-alkyl)-amino-carbonyl substituiert ist), für $C_2$-$C_6$-Alkenyl (welches gegebenenfalls durch Fluor, Chlor und/oder Brom substituiert ist), $C_2$-$C_6$-Alkinyl oder für Phenyl-$C_1$-$C_2$-alkyl (welches im Phenylteil gegebenenfalls durch Fluor, Chlor, Brom, Nitro,

Cyano, $C_1$-$C_4$-Alkyl, $C_1$-$C_4$-Alkoxy oder $C_1$-$C_4$-Alkoxy-carbonyl substituiert ist) steht.

2. Verfahren zur Bekämpfung von Unkraut, dadurch gekennzeichnet, daß man Halogenalkoxyphenylsulfonylisothioureidoazine der Formel (I) auf Unkraut und/oder seinen Lebensraum einwirken läßt.

3. Verwendung von Halogenalkoxyphenylsulfonylisothioureidoazinen der Formel (I) zur Bekämpfung von Unkraut.

4. Verfahren zur Herstellung von herbiziden Mitteln, dadurch gekennzeichnet, daß man Halogenalkoxyphenylsulfonylisothioureidoazine gemäß Formel (I) mit Streckmitteln und/oder oberflächenaktiven Mitteln vermischt.

Europäisches Patentamt

# EUROPÄISCHER RECHERCHENBERICHT

Nummer der Anmeldung

EP 87 10 0290

| EINSCHLÄGIGE DOKUMENTE | | | |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| E | EP-A-0 173 321 (BAYER)<br>* Seiten 17,18; Beispiele VII-6,9,10,20,25,32,38,41; Anspruch 8 *<br>--- | 1 | A 01 N 47/42 |
| E | EP-A-0 173 956 (BAYER)<br>* Seite 15, Formel VII; Seite 52, Zeilen 29-32; Beispiele VII-11,12,13,26; Anspruch 6 *<br>----- | 1 | |
| | | | **RECHERCHIERTE SACHGEBIETE (Int. Cl.4)** |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 26-05-1987 | NATUS |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument